# DEMANDE DE BREVET EUROPEEN

(11) **EP 0 623 400 A1**
(43) Date de publication de la demande: **09.11.1994**
(21) Numéro de dépôt: 94400087.6
(22) Date de dépôt: 13.01.1994
(51) Int. Cl.: B09B 3/00, A62D 3/00, C04B 18/10, B01D 53/34

(54) **Procédé de traitement des résidus solides issus de l'incinération des déchets ménagers et/ou industriels et produit solide obtenu par ce procédé**

(30) Priorité: 09.02.1993 FR 9301411
(71) Demandeur: CONSTRUCTIONS INDUSTRIELLES DE LA MEDITERRANEE- CNIM, F-75008 Paris (FR)
(72) Inventeur: Tabaries, Frank, F-83000 Toulon (FR)
(74) Mandataire: Berger, Helmut

(57) **Abrégé**

Selon l'invention, on met en contact les résidus solides à traiter avec un acide minéral choisi de façon à obtenir, en final, un résidu solide dans lequel les oxydes et/ou les hydroxydes de calcium contenus au départ dans les résidus sont sous forme des sels de calcium insolubles correspondants.

Ce procédé s'applique au traitement des résidus solides issus de l'incinération des déchets ménagers et/ou industriels.

## Description

L'invention concerne un procédé de traitement des résidus solides issus de l'incinération des déchets ménagers et/ou industriels. Elle vise également le produit solide obtenu par ce procédé.

Les résidus solides issus de l'incinération des déchets ménagers et/ou industriels sont constitués principalement de trois catégories de produits :
- les mâchefers, résidus de la combustion constitués de particules minérales de dimensions importantes,
- les cendres volantes, constituées des particules minérales de dimensions réduites entraînées par les gaz de combustion,
- les produits des réactions de neutralisation et les réactifs en excès provenant du traitement des fumées souvent mélangés aux cendres volantes.

Les deux dernières catégories de produits sont communément désignées sous le vocable de REFIOM (Résidus de l'Epuration des Fumées d'Incinération d'Ordures Ménagères).

Ces trois catégories de résidus contiennent de la chaux anhydre (CaO) et de la chaux hydratée (Ca(OH)₂), composés trop peu solubles pour être éliminés par un simple lavage mais suffisamment solubles pour que lors des tests de lixiviation pratiqués sur ces résidus, la fraction soluble des lixiviats soit trop importante pour permettre soit la valorisation des mâchefers en technique routière, soit le stockage des REFIOM en décharge de classe 2.

De plus, une solution saturée en chaux a un pH très élevé (environ 12,4) ce qui favorise la mise en solution des métaux lourds, tels que le plomb, contenu dans les mâchefers, ce qui est un obstacle supplémentaire à la valorisation des mâchefers en technique routière.

On connaît de nombreuses techniques de traitement de ces résidus. Une technique de traitement du mâchefer consiste à les stocker sur une aire soumise aux eaux de pluie. Ces eaux chargées en gaz carbonique dissous vont carbonater les grains de chaux anhydre (oxyde de calcium) et de chaux hydratée (hydroxyde de calcium) en surface lors de leur percolation à travers les mâchefers.

Le carbonate de calcium constitue une enveloppe très peu soluble autour du grain de chaux, cette enveloppe limitant la solubilisation de la chaux.

Mais ces réactions sont très lentes et fortement liées au régime de précipitations locales. De plus, les REFIOM ne peuvent être traités de cette manière en particulier du fait de leurs dimensions réduites.

L'invention a pour but de pallier les inconvénients précédents dus à la présence de chaux, en proposant un procédé de traitement des résidus solides issus de l'incinération des déchets industriels et/ou ménagers applicable aussi bien aux mâchefers qu'aux REFIOM.

A cet effet, le procédé selon l'invention se caractérise en ce que les résidus constitués des mâchefers et/ou des REFIOM sont mis en contact avec un acide minéral afin d'obtenir, en final, un résidu solide dans lequel les oxydes et/ou les hydroxydes de calcium, contenus au départ dans lesdits résidus, sont sous forme du sel de calcium insoluble correspondant.

Selon une caractéristique du procédé, les oxydes et/ou les hydroxydes de calcium sont totalement transformés en sels de calcium insolubles.

Selon une autre caractéristique du procédé, seule la surface des grains constitués des oxydes et/ou des hydroxydes de calcium est transformée en sels de calcium insolubles.

Selon une particularité de l'invention, on utilise une quantité d'acide minéral comprise entre environ 0,3 et environ 1 fois la quantité stooechiométrique d'acide nécessaire à la transformation, en sels de calcium insolubles correspondants, de la totalité des oxydes et/ou des hydroxydes de calcium, de préférence on utilise 0,3 fois ladite quantité stoechiométrique d'acide.

Selon une autre particularité de l'invention, on maintient les résidus solides en contact avec l'acide minéral pendant une durée supérieure à environ 30 minutes, de préférence égale à environ 2 heures.

Selon une variante du procédé l'acide minéral est l'acide phosphorique, le sel de calcium insoluble correspondant étant le phosphate tricalcique.

Selon une autre variante du procédé, l'acide minéral est l'acide fluorhydrique, le sel de calcium insoluble correspondant étant le bifluorure de calcium.

Selon encore une autre caractéristique du procédé, lorsque l'acide est de l'acide phosphorique concentré à 75 %, on met en contact environ 1 tonne de mâchefers avec une quantité d'acide phosphorique comprise entre environ 5 l et environ 10 l et/ou en ce qu'on met en contact environ 1 tonne de REFIOM avec une quantité d'acide phosphorique comprise entre environ 5 l et environ 50 l.

Selon une autre particularité de l'invention, lorsque l'acide minéral est l'acide phosphorique, les matières organiques dissoutes dans les résidus à traiter sont oxydées totalement ou partiellement par l'acide phosphorique.

Le produit solide obtenu par le procédé selon l'invention est caractérisé en ce que les oxydes et/ou les hydroxydes de calcium qu'il contient sont soit totalement soit partiellement, c'est-à-dire en surface, transformés en sels de calcium insolubles.

Le lixiviat obtenu à partir du produit issu de ce procédé a un pH inférieur à environ 12, ce qui limite la solubilisation du plomb dans ce lixiviat.

Selon une dernière caractéristique de l'invention, lorsqu'on utilise de l'acide phosphorique, les matières organiques solubles contenues dans le produit de départ à traiter sont partiellement oxydées par l'acide phosphorique ce qui change l'odeur du produit final obtenu.

L'invention sera mieux comprise et d'autres buts, caractéristiques, détails et avantages de celle-ci apparaîtront plus clairement au cours de la description explicative qui suit faite et qui est faite en référence aux dessins schématiques annexés donnés uniquement à titre d'exemples et dans lesquels.

La figure 1 illustre schématiquement un dispositif permettant la transformation en sels insolubles des oxydes et/ou des hydroxydes de calcium contenus dans les mâchefers.

La figure 2 illustre schématiquement un dispositif permettant la transformation en sels insolubles des oxydes et/ou des hydroxydes de calcium contenus dans les REFIOM.

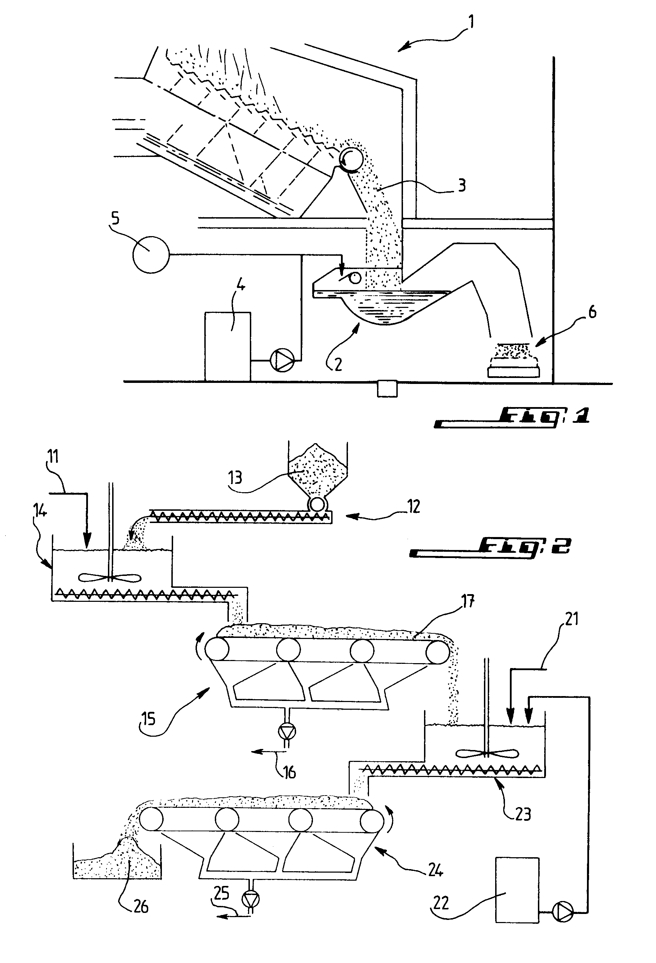

Lors de la combustion, sur grille ou dans un four tournant ou en lit fluidisé dense ou circulant, des déchets ménagers et/ou industriels, on collecte au sortir de la chambre de combustion 1 représentée en figure 1, des mâchefers 3 qui font ensuite l'objet d'une extinction par refroidissement et passage dans un extracteur 2 où arrive de l'eau provenant d'une source 5.

Le traitement d'insolubilisation de la chaux selon l'invention est opéré dans cet extracteur 2 par ajout d'un acide minéral permettant la formation des sels insolubles de calcium par réaction sur les oxydes et/ou les hydroxydes de calcium contenus dans les résidus à traiter, tel que l'acide fluorhydrique ou tel que l'acide phosphorique, acides qui sont stockés dans le bac de stockage 4. L'acide est injecté en même temps que l'eau 5 d'extinction. Il peut également être préalablement dilué dans le bac de stockage 4. La solution injectée sera alors une solution contenant de l'acide dilué.

La quantité d'acide à injecter sera variable en fonction de la quantité de chaux à transformer et du degré de phosphatation et/ou de fluoration recherché. Cependant, lorsqu'on utilise de l'acide phosphorique on injectera entre environ 5 l et environ 10 l de solution d'acide phosphorique à 75 % par tonne de mâchefers, la quantité d'eau utilisée variant entre environ 200 l et environ 500 l par tonne de mâchefers.

Lorsqu'on connaît précisément la quantité de chaux contenue dans les mâchefers, on utilisera une quantité d'acide minéral variant entre environ 0,3 et environ une fois la quantité stoechiométrique d'acide minéral nécessaire à la transformation, de la totalité de la chaux, en sels insolubles, ce qui dans le cas où l'on utilise de l'acide phosphorique revient à utiliser le rapport molaire d'acide phosphorique à la chaux variant entre environ 0,2 : 1 et environ 2 : 3 et, dans le cas où l'on utilise de l'acide fluorhydrique correspond à un rapport molaire d'acide fluorhydrique à la chaux variant entre environ 0,4 : 1 et environ 2 : 1.

Les phosphates de calcium formés peuvent être partiellement hydratés mais de tels phosphates étant solubles, ils resteront dans l'eau d'extinction contenue dans l'extracteur 2 pour réagir avec la chaux et le solide 6 obtenu à l'issue de ce traitement contiendra, outre les produits autre que la chaux contenus dans les résidus avant traitement, des grains constitués soit totalement soit seulement en surface de phosphate tricalcique (Ca₃(PO₄)₂) insoluble.

Lors des opérations de lixiviation ultérieures le solide 6 ne présentera plus de fraction soluble due à la chaux et le pH du lixiviat sera inférieur à environ 12 ce qui résoud le problème de la solubilisation du plomb dans ces lixiviats.

Par ailleurs, de façon inattendue, le résidu 6 obtenu par traitement avec l'acide phosphorique a une odeur plus agréable que les mâchefers non traités de cette façon, ce qui correspond à l'oxydation des matières organiques dissoutes dans les mâchefers.

De plus l'utilisation de l'acide phosphorique n'entraîne aucune détérioration des matériaux constituant l'installation de traitement des mâchefers. Elle évite même l'entartrage de cette installation.

Au cas où l'on ne procéderait pas habituellement à l'extinction des mâchefers à l'eau, le dispositif illustré en figure 1, par exemple, sera ajouté à l'installation déjà existante.

Les REFIOM sont constitués en grande partie de produits très solubles : le chlorure de sodium, le chlorure de potassium et le chlorure de calcium, facilement éliminables par un simple lavage.

L'ajout d'acide peut être réalisé sur le résidu du lavage (si l'acide était ajouté lors de l'opération de lavage, il serait consommé par les ions calcium en solution provenant du chlorure de calcium).

On a représenté en figure 2 une installation permettant de réaliser sur les REFIOM, le traitement, précédemment cité, visant à réduire la fraction soluble de ces résidus.

Cette installation comprend une installation de lavage permettant d'éliminer les produits très solubles et une installation permettant de réaliser la transformation de la chaux en composés insolubles.

Les REFIOM 13 sont collectés en sortie de l'installation (non représentée) de traitement des fumées issues de l'incinération des déchets ménagers et/ou industriels et, sont injectés, par un système 12 d'injection, dans un réacteur 14 où ils sont mélangés avec de l'eau 11 de lavage.

La boue, constituée des REFIOM 13 et de l'eau 11 de lavage, formée dans le réacteur 14 est ensuite filtrée sur un filtre 15, tel que par exemple un filtre à bande et la saumure 16 est ensuite évacuée.

On récupère le résidu solide 17 lavé et débarassé de sa saumure de lavage pour l'introduire dans l'installation de réaction avec un acide minéral.

Cette installation de réaction avec l'acide minéral comprend une source 21 d'eau de lavage, un système d'injection d'acide minéral 22 et un réacteur 23 dans lequel sont injectés le résidu lavé à traiter et l'acide minéral.

La quantité d'acide à utiliser pour ce traitement dépend de la quantité de chaux contenue dans les REFIOM 13. Généralement, lorsqu'on utilise de l'acide phosphorique, le rapport molaire de l'acide phosphorique à la chaux varie entre environ 0,2 : 1 et environ 2 : 3 et, lorsqu'on utilise de l'acide fluorhydrique le rapport molaire de l'acide fluorhydrique à la chaux varie entre environ 0,6 : 1 et 2 : 1.

La quantité d'eau 21 injectée est comprise entre 200 l et environ 1 m³ par tonne de REFIOM à traiter.

La suspension contenue dans le réacteur 23 est ensuite filtrée sur un filtre 24, tel que par exemple un filtre à bande et la saumure 25 peut être réutilisée comme eau 11 de lavage. On récupère le résidu solide 26 traité, la chaux étant transformée en sel insoluble et/ou recouverte d'une pellicule de sel insoluble.

Ce résidu 16, comme précédemment, ne contient plus que, outre les produits non transformables par l'acide, les sels de calcium insolubles correspondant et/ou des grains de chaux anhydre ou hydratée dont la surface est constituée d'un sel de calcium insoluble.

Ce résidu 16 a les mêmes caractéristiques que le résidu solide obtenu après le traitement des mâchefers.

Ces deux types de résidu peuvent donc être soit recyclés en technique routière, soit stockés en décharge de classe 2.

Bien entendu l'invention n'est nullement limitée aux modes de réalisation décrits et illustrés qui n'ont été donnés qu'à titre d'exemples.

Ainsi ce procédé est applicable aussi bien au traitement des mâchefers produits dans les usines d'incinération de déchets industriels et/ou ménagers à combustion sur grille ou à four tournant, qu'aux mâchefers d'origine sidérurgique par exemple.

Ce procédé est également applicable au traitement des cendres issues de la combustion des déchets en général et indépendamment du mode de combustion, c'est-à-dire aux déchets produits dans les usines d'incinération de déchets industriels et/ou ménagers à combustion sur grille, four tournant ou en lit fluidisé dense ou circulant et/ou aux cendres issues des installations de combustion de combustibles fossiles tels que le charbon, le fuel ou le gaz et/ou aux traitements des cendres d'origine sidérurgique.

Au contraire l'invention comprend tous les équivalents techniques des moyens décrits ainsi que leurs combinaisons si celles-ci sont effectuées suivant son esprit.

## Revendications

1. Procédé de traitement des résidus solides issus de l'incinération des déchets ménagers et/ou industriels, contenant des oxydes et/ou hydroxydes de calcium caractérisé en ce qu'on met en contact lesdits résidus avec de l'acide phosphorique ou de l'acide fluorhydrique suivant une quantité comprise entre environ 0,3 et environ une fois la quantité stoechiométrique, nécessaire pour transformer la totalité des oxydes et/ou hydroxydes, de façon à transformer seulement la surface des grains d'oxydes et d'hydroxydes de calcium en phosphate tricalcique ou en biflorure de calcium, respectivement, cette surface formant une pellicule de sels insolubles et résistants à la lixiviation.

2. Procédé selon la revendication 1, caractérisé en ce que la quantité d'acide phosphorique ou d'acide fluorhydrique est de 0,3 fois la quantité stoechiométrique nécessaire.

3. Procédé selon la revendication 1 ou 2, caractérisé en ce qu'on maintient en contact l'acide phosphorique ou l'acide fluorhydrique et les résidus à traiter pendant une durée supérieure à environ 30 minutes.

4. Procédé selon l'une des revendications précédentes, caractérisé en ce qu'on maintient en contact l'acide phosphorique ou l'acide fluorhydrique et les résidus à traiter pendant deux heures.

5. Procédé selon l'une des revendications précédentes, caractérisé en ce que lorsque les résidus à traiter sont des mâchefers et que l'on utilise une solution d'acide phosphorique concentrée à 75%, on met en contact environ 1 tonne de mâchefers avec une quantité d'acide phosphorique comprise entre environ 5 litres et environ 10 litres.

6. Procédé selon l'une des revendications 1 à 4, caractérisé en ce que lorsque les résidus à traiter sont des résidus issus de l'épuration des fumées d'incinération d'ordures ménagères et qu'on utilise de l'acide phosphorique concentré à 75%, on met en contact environ 1 tonne de résidus avec une quantité d'acide phosphorique comprise entre environ 5 litres et environ 50 litres.

7. Procédé selon l'une quelconque des revendications précédentes, caractérisé en ce que lorsqu'on utilise l'acide phosphorique, les matières organiques solubles contenues dans les résidus à traiter sont oxydées partiellement et/ou totalement par l'acide phosphorique ce qui a souvent pour effet d'en modifier l'odeur.

8. Produit solide obtenu par le procédé selon l'une des revendications précédentes, caractérisé en ce qu'il comprend des oxydes et/ou des hydroxydes de calcium transformés en sels de calcium insolubles seulement en surface.

9. Produit selon la revendication 8, caractérisé en ce que le pH de la solution obtenue par lixiviation dudit produit est inférieur à environ 12, ce qui évite la solubilisation du plomb.

10. Produit solide obtenu par le procédé selon l'une des revendications 1 à 7, caractérisé en ce qu'il comprend des oxydes et/ou hydroxydes de métaux lourds tels que le plomb et le zinc, transformés en phosphates insolubles seulement en surface.
